Europäisches Patentamt

European Patent Office

Office européen des brevets

(19)

(11) Veröffentlichungsnummer : **0 460 515 B1**

## (12) EUROPÄISCHE PATENTSCHRIFT

(45) Veröffentlichungstag der Patentschrift :
**02.11.94 Patentblatt 94/44**

(51) Int. Cl.$^5$ : **H02J 7/10**

(21) Anmeldenummer : **91108754.2**

(22) Anmeldetag : **29.05.91**

(54) **Ladeverfahren für Akkus.**

(30) Priorität : **07.06.90 DE 4018223**

(43) Veröffentlichungstag der Anmeldung :
**11.12.91 Patentblatt 91/50**

(45) Bekanntmachung des Hinweises auf die
Patenterteilung :
**02.11.94 Patentblatt 94/44**

(84) Benannte Vertragsstaaten :
**BE FR GB IT**

(56) Entgegenhaltungen :
**DE-A- 3 315 923**
**US-A- 3 854 082**

(56) Entgegenhaltungen :
**US-A- 4 163 934**
**PATENT ABSTRACTS OF JAPAN vol. 6, no.**
**182 (E-131)18. September 1982 & JP-A-57 096**
**474**

(73) Patentinhaber : **DORNIER GMBH**
**Postfach 1420**
**D-88004 Friedrichshafen (DE)**

(72) Erfinder : **Denzinger, Wolfgang, Dipl.-Ing.**
**Waringstrasse 9**
**W-7990 Friedrichshafen 24 (DE)**

(74) Vertreter : **Landsmann, Ralf, Dipl.-Ing.**
**Dornier GmbH**
**FNS 003**
**D-88039 Friedrichshafen (DE)**

EP 0 460 515 B1

## Beschreibung

Die Erfindung betrifft ein Ladeverfahren für Akkumulatoren mit Zwei Schritten nach dem Oberbegriff des Patentanspruchs.

In Satelliten auf erdnahen Bahnen wir üblicherweise zum Aufladen der Stromspeicher (Akkumulatoren) das zweistufige "Taper"-Ladeverfahren angewandt, bei dem die Batterie mit Konstantstrom geladen wird, bis ein vorgegebener Spannungspegel (Ladeschlußspannung) erreicht ist. Im zweiten Schritt wird die Spannung konstant gehalten, dabei nimmt der Ladestrom ab (Taper-Phase). In der Regel wird der Spannungspegel automatisch auch noch an die Batterietemperatur angepasst ($-2,3$ mV/$_{Zelle \bullet °C}$) und kann zusätzlich noch per Kommando verändert werden, um Alterungsprozesse der Batterie zu kompensieren.

In der **DE-OS 37 32 339** ist ein Ladeverfahren in drei Phasen beschrieben, wobei die ersten beiden Phasen dem Taper-Verfahren entsprechen. Während der dritten Phase wird je nach Ladezustand der Batterie Strom oder Spannung auf einen konstanten Wert erhöht, um die vollständige Aufladung der Batterie zu erreichen.

In der **JP 57-96474 (A)** ist ein Ladeverfahren in zwei Phasen beschrieben. Dabei wird während der ersten Phase mit konstantem Ladestrom, während der zweiten Phase mit konstanter Batteriespannung geladen. Die zweite Phase wird solange fortgesetzt, bis der Strom ansteigt, wobei dieser Anstieg als Abbruchkriterium für den Ladevorgang dient.

In Satelliten ist die Ladedauer festgelegt durch die Dauer der Sonnenphase, während der der Satellit auf seiner Umlaufbahn der Sonne exponiert ist. Bei niederen Umlaufbahnen ist die Ladedauer geringer als eine Stunde, so daß die Aufladung bei vergleichsweise hohen Ladeströmen erfolgen muß. Da auf diesen Umlaufbahnen pro Jahr etwa 6000 Be- und Entladezyklen durchlaufen werden, ist ein Schnelladeverfahren notwendig, bei dem sichergestellt ist, daß die Batterie nicht überladen, also thermisch möglichst wenig gestreßt wird.

Aufgabe der Erfindung ist es, ein Ladeverfahren zu schaffen, mit dem eine schnelle, sichere und trotzdem schonende Volladung der Batterie erreicht werden kann. Diese Aufgabe wird erfindungsgemäß gelöst von einem Ladeverfahren mit den Merkmalen des Patentanspruchs.

Erfindungsgemäß wird das bekannte "Taper"-Ladeverfahren um eine stromabhängige Veränderung der Batteriespannung während der zweiten Phase erweitert, so daß bei höherem Ladestrom eine höhere Batteriespannung zugelassen wird als bei keinem Ladestrom. Die Batteriespannung wird aufgeteilt in einen stromabhängigen und einen stromunabhängigen Anteil. Nur der stromabhängige Anteil, der dem Innenwiderstand $R_i$ der Batterie angepaßt wird, kann verändert werden.

Es bestehen folgende Zusammenhänge:

$$U = U_o + \Delta U$$

wobei

$U_o =$ stromunabhängiger Anteil der Batteriespannung U, der in der Regel für die gegebenen Randbedingungen (experimentell) bestimmt wird.

$\Delta U =$ stromabhängiger Anteil der Batteriespannung U

$$\Delta U = f \bullet i_L \bullet R_i$$

mit

$f =$ Faktor (kleiner 1, insbesondere bei 0,8)

$i_L =$ Ladestrom

$R_i =$ Innenwiderstand der Batterie.

In der Praxis hat sich folgende Einstellung bewährt:

$$\Delta U = 0,8 \bullet i_L \bullet R_i.$$

Bei dieser Einstellung werden ungefähr $\sim 80\%$ des Batterieinnenwiderstands kompensiert. Eine hundertprozentige Kompensation ist nicht möglich, da dies zu Instabilitäten des Regelkreises führen würde.

Bei Anwendung des neuen Ladeverfahrens ergibt sich eine weitgehende Unabhängigkeit des Ladefaktors (= Verhältnis von geladener Ladung in Amperesekunden zu entnommener Ladung in Amperesekunden) von unterschiedlichen Ladeströmen und unterschiedlichen Entladetiefen. Dadurch wird der thermische Streß der Batterie minimiert und somit die Lebensdauer optimiert. Praktische Versuche haben gezeigt, daß eine Änderung der Lade-/Entladezeiten von 55/37 Min auf 68/24 Min bei gleichen Strömen eine Änderung des Ladefaktors von nur 1,03 auf 1,07 ergeben haben. Bei hohen Ladefaktoren produziert der Ladestrom am Ende der Ladephase im wesentlichen Verlustleistung, dies führt zu einer Temperaturerhöhung.

Das erfindungsgemäße Verfahren eignet sich für alle Akkumulatoren, sowohl in Satelliten als auch für terristische Anwendungen, z.B. in Werkzeugen, Videokameras o.ä.. Besonders geeignet ist es für NiCd- und $NiH_2$-Batterien.

Die Erfindung wird anhand zweier Figuren näher erläutert.

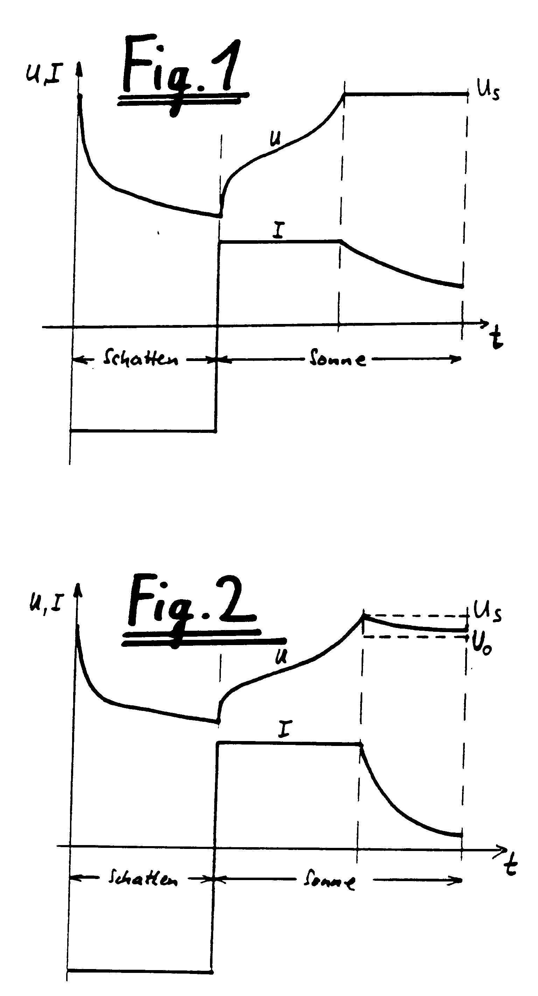

Die beiden Figuren zeigen den zeitlichen Verlauf von Ladestrom und Ladespannung, wobei Fig. 1 den Stand der Technik zeigt und Fig. 2 ein erfindungsgemäßes Ladeverfahren.

Fig. 1 zeigt - bei der Satellitenanwendung - die Entladung in der Schattenphase und die darauffolgende Ladung, wenn der Satellit in die Sonne kommt. Bei dem Ladeverfahren des Standes der Technik ist die erste Phase eine Ladung mit konstantem Stromfluß I. Diese Phase geht bis zu einem vorgegebenen Wert der Batteriespannung U, der Ladeschlußspannung $U_s$. Als zweite Phase wird mit dieser Spannung $U_s$ konstant weitergeladen. Wie die Fig. zeigt, sinkt dabei der Ladestrom I ab.

Fig. 2 zeigt den Verlauf von Ladestrom I und Ladespannung U nach dem erfindungsgemäßen Verfahren. Die links gezeigte Schattenphase ist wieder gleich. Entladung mit einem negativen Strom I und Abfall der Batteriespannung U. Der Beginn der Ladung erfolgt nun wie beim Stand der Technik mit einer ersten Phase mit Konstantstromladung, wobei wieder bis zu einer vorgegebenen Ladeschlußspannung $U_s$ geladen wird. Die Ladeschlußspannung $U_s$ liegt gleich oder höher als $U_s$ der Fig. 1. Die zweite Phase erfolgt nun mit einer anfänglich hohen Spannung, die hier mit abnehmendem Strom I reduziert wird. Dies führt, verglichen mit dem Verfahren nach Fig. 1, zu einer wesentlich stärkeren Abnahme des Ladestroms. Die Batteriespannung U kann während der zweiten Phase maximal um den stromabhängigen Anteil $\Delta U$ abnehmen.

Das Ladeverfahren des Standes der Technik (Fig. 1) kann nur für einen bestimmten Ladestrom und für feste Zeiten für Ladung und Entladung optimiert sein. Die Batterie wird insbesondere dann überladen, wenn der Ladestrom kleiner ist, die Entladetiefe geringer ist oder die Ladezeit verlängert wird. Beim erfindungsgemäßen Verfahren nach Fig. 2 wird die Ladeschlußspannung U dem Ladestrom angepasst, deshalb tritt keine Überladung bei kleineren Ladeströmen ein. Bei Verlängerung der Ladezeit oder bei kleineren Entladetiefen ist die Überladung gering, da der Taper-Strom auf sehr kleine Werte reduziert wird.

**Patentansprüche**

1. Ladeverfahren für Akkumulatoren mit zwei Schritten, wobei der erste Schritt eine Konstantstromladung bis zu einem vorgegebenen Wert der Batteriespannung U ist, **dadurch gekennzeichnet,** daß im zweiten Schritt die Batteriespannung U abhängig vom Ladestrom $i_L$ begrenzt wird, wobei zwischen der Batteriespannung U und dem Ladestrom $i_L$ folgender Zusammenhang besteht:

$$U = U_o + \Delta U$$

wobei

| | |
|---|---|
| $U_o =$ | stromunabhängiger Anteil der Batteriespannung U |
| $\Delta U =$ | stromabhängiger Anteil der Batteriespannung U |

$$\Delta U = f \bullet i_L \bullet R_i$$

mit

| | |
|---|---|
| $f =$ | Faktor kleiner 1, bevorzugt zwischen 0,5 und 1, insbesondere bei 0,8 |
| $i_L =$ | Ladestrom |
| $R_i =$ | Innenwiderstand der Batterie. |

**Claims**

1. Method of charging accumulators, with two steps, in which the first step is constant-current charging up to a predetermined value of the battery voltage U, characterized in that, in the second step, the battery voltage U is limited in dependence on the charging current $i_L$, the following relationship existing between the battery voltage U and the charging current $i_L$:

$$U = U_o + \Delta U$$

in which

| | |
|---|---|
| $U_o =$ | the portion of the battery voltage U which is not dependent on the current |
| $\Delta U =$ | the current-dependent portion of the battery voltage U |

$$\Delta U = f.i_L.R_i$$

where

| | |
|---|---|
| $f =$ | a factor smaller than 1, preferably between 0.5 and 1, particularly 0.8 |
| $i_L =$ | the charging current |
| $R_i =$ | the internal resistance of the battery. |

## Revendications

1. Procédé de charge de batteries en deux étapes, la première étape étant une charge à courant constant jusqu'à une valeur prédéterminée de la tension de batterie U, caractérisé en ce qu'au cours de la seconde étape la tension de batterie U est limitée en fonction du courant de charge $i_L$, la tension de batterie U et le courant de charge $i_L$ étant liés par la relation suivante :

$$U = U_o + U$$

où

$U_o$ = partie de la tension de batterie U indépendante du courant

$\Delta_U$ = partie de la tension de batterie U qui dépend du courant

$$\Delta_U = f \cdot i_L \cdot R_i$$

avec

f = facteur inférieur à 1,
de préférence ente 0,5 et 1, et notamment de l'ordre de 0,8

$i_L$ = courant de charge

$R_i$ = résistance interne de la batterie

Fig.1

Fig.2